# FASCICULE DE BREVET EUROPEEN

(11) **EP 1 873 093 B1**
(45) Date de publication et mention de la délivrance du brevet: **16.01.2013**
(21) Numéro de dépôt: 07111397.1
(22) Date de dépôt: 29.06.2007
(51) Int. Cl.: B65G 51/06, B65G 51/02, B65D 33/18

(54) **Emballage souple de transport sur réseau pneumatique**
Flexible Verpackung zum Transport von Gegenständen in pneumatische Rohrleitungen
Flexible package for transporting objects in pneumatic conveyer systems

(30) Priorité: 30.06.2006 FR 0652760
(43) Date de publication de la demande: 02.01.2008
(73) Titulaire: Decomatic S.A., 38290 La Verpillière (FR)
(72) Inventeur: Allegre, Jean-Luc, 38460 Chozeau (FR)
(74) Mandataire: Thibault, Jean-Marc

(56) Documents cités:
- EP-A2- 0 283 279
- WO-A-91/18797
- FR-A- 2 876 084
- FR-A1- 2 839 959
- FR-A1- 2 869 593
- GB-A- 2 339 187
- US-A- 3 104 798

## Description

La présente invention concerne le domaine technique des emballages souples destinés au transport d'articles, tel que par exemple des produits pharmaceutiques, des prélèvements effectués dans les centres hospitaliers, des composants électroniques ou de l'argent, à l'intérieur d'un réseau pneumatique, par aspiration ou soufflerie.

Par exemple, dans le domaine de la collecte de prélèvements sanguins ou autres, il est connu de mettre en oeuvre un réseau pneumatique comportant plusieurs postes de collecte pour des prélèvements placés dans des emballages qui sous l'effet de l'air comprimé du réseau sont acheminés vers un poste central.

L'état de la technique a proposé diverses solutions de réalisation d'emballages souples. Par exemple, le brevet FR 2 876 679 ou le brevet FR 2 859 987 décrit un emballage souple comprenant un sac réalisé en une matière plastique soudée dont l'ouverture donnant accès au volume interne est obturable après remplissage. Un tel emballage est équipé d'un système de propulsion l'intérieur du réseau pneumatique constitué par un soufflet. L'emballage présente une largeur à plat de préférence supérieure au diamètre du tube du réseau pneumatique pour être véhiculé de manière optimum par aspiration ou soufflerie.

Il doit être considéré qu'un tel emballage souple, une fois obturé, présente une forme variable qui dépend d'une part, du produit inséré à l'intérieur de l'emballage et, d'autre part de la position du produit à l'intérieur de l'emballage. Il s'avère en pratique quelquefois relativement difficile d'insérer un tel emballage à l'intérieur du réseau dans une position idéale pour lui permettre son transport à l'intérieur du réseau. L'introduction d'un tel emballage dans le réseau de transport est d'autant plus difficile que la largeur à plat de l'emballage est de préférence supérieure au diamètre du réseau de transport.

Dans l'état de la technique, il est également connu, par la demande de brevet WO91/18797, un emballage souple pour des produits liquides présentant un fond d'appui tubulaire permettant de maintenir l'emballage en position érigée. L'emballage présente à l'opposé du fond d'appui, un bord transversal de largeur inférieure au reste de l'emballage.

De manière similaire, la demande de brevet GB 2 339 187 décrit un sac pour contenir en particulier des produits alimentaires ou des produits de consommation solides ou liquides, adapté pour se tenir de façon stable sur une surface et comportant une fermeture pouvant être facilement ouverte. Le sac comporte un rabat de fermeture de l'ouverture donnant accès à l'intérieur du sac. Le rabat de fermeture est fixé de façon décollable au sac à l'aide d'un adhésif pour libérer l'ouverture. Selon une variante de réalisation, le sac comporte des coins assemblés en onglet qui peuvent être supprimés de sorte que le sac présente un bord transversal de largeur inférieur au reste de l'emballage, cette variante de réalisation permettant d'améliorer la palettisation du sac.

La demande de brevet européen EP 0 283 279 propose un emballage avec une ouverture facile non étanche dont la fermeture est assurée par le pliage des coins du sac sur lesquels est rabattu un volet qui est collé sur les coins et le sac.

La Déposante a eu le mérite de mettre en évidence qu'il existait le besoin de pouvoir faciliter l'introduction des emballages souples dans les réseaux pneumatiques de manière à pouvoir les insérer dans la position adaptée pour assurer leur transport à l'intérieur du réseau pneumatique.

L'objet de l'invention vise donc à proposer un emballage souple conçu pour pouvoir être facilement introduit dans un réseau pneumatique tout en étant adapté pour être inséré dans une position idéale pour être déplacé à l'intérieur d'un réseau pneumatique.

Pour atteindre un tel objectif, l'objet de l'invention concerne un emballage pour le transport d'articles à l'intérieur d'un réseau pneumatique, conforme à la revendication 1.

Selon l'invention au moins le bord transversal dit antérieur par rapport au sens de transport possède une largeur inférieure au reste de l'emballage de sorte que l'emballage présente à partir de ce bord transversal, un nez d'introduction à l'intérieur du réseau pneumatique.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue d'un exemple de réalisation d'un emballage conforme à l'invention avant introduction du produit à conditionner.
La **Figure 2** est une vue en coupe longitudinale d'un autre exemple de réalisation d'un emballage conforme à l'invention.
La **Figure 3** est une vue d'un emballage conforme à l'invention.
Les **Figures 4** à **6** illustrent diverses autres variantes de réalisation d'un emballage conforme à l'invention.
La **Figure 7** illustre une autre variante de réalisation d'un emballage conforme à l'invention.

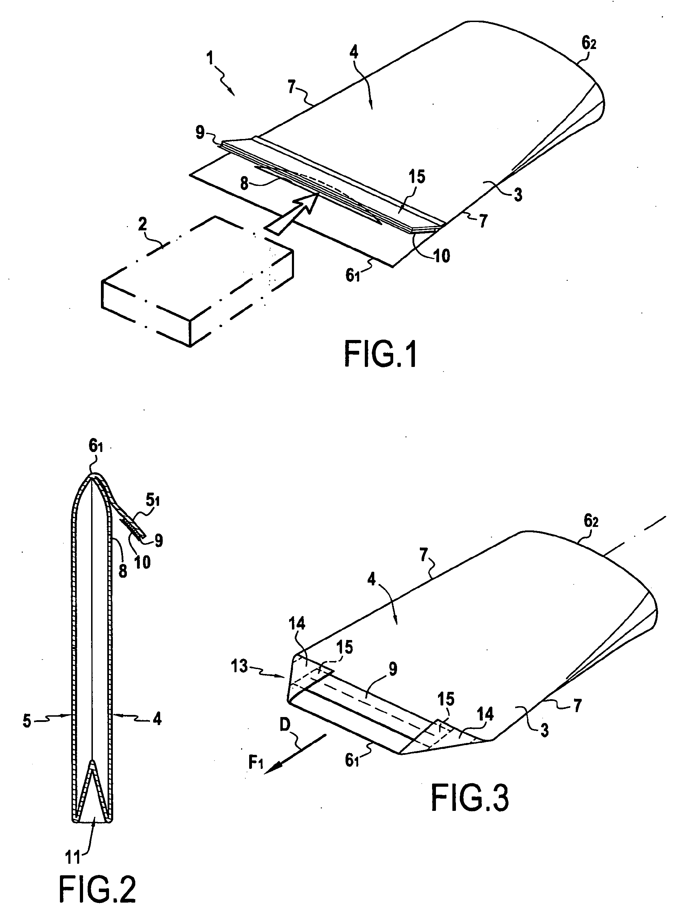

Tel que cela ressort plus précisément des **Fig. 1** à **3****,** l'objet de l'invention concerne un emballage **1** destiné à contenir des articles de toute nature, tels que par exemple des prélèvements sanguins ou autres, des produits pharmaceutiques ou des billets de banque représentés de façon schématique par la référence **2.** Un tel emballage **1** est destiné à être introduit à l'intérieur d'un réseau pneumatique, non représenté, mais connu en soi pour permettre le transport d'un lieu à l'autre, de l'article **2** contenu dans l'emballage.

D'une manière connue, l'emballage **1** se présente sous la forme d'un sac **3** réalisé en matière plastique souple, de préférence recyclable, tel qu'en polyéthylène. Le sac **3** possède une face dite recto **4** et une face dite verso **5,** délimitées par deux bords transversaux opposés **6₁, 6₂** sensiblement parallèles entre eux et deux bords longitudinaux opposés **7** sensiblement parallèles entre eux. Dans l'exemple illustré, l'emballage **1** présente une forme rectangulaire. Les bords **6₁, 6₂** sont dits transversaux en considération d'une part, de la forme allongée de l'emballage illustré dans l'exemple de réalisation et, d'autre part de la direction de circulation de transport de l'emballage **1** à l'intérieur du réseau pneumatique, schématisée par l'axe **D.** En d'autres termes, la direction **D** de transport de l'emballage **1** est sensiblement perpendiculaire aux bords transversaux **6₁, 6₂.** De plus, en considération du sens de transport représenté par la flèche **F₁** à la **Fig. 3****,** les bords transversaux sont appelés respectivement antérieur **6₁** et postérieur **6₂.**

Les faces **4, 5** du sac **3** sont réalisées à partir d'une feuille plastique souple repliée ou de deux feuilles plastiques souples superposées dont au moins certains des bords sont soudés de manière à délimiter un volume interne fermé accessible par un passage d'accès **8** obturable par un moyen de fermeture **9.** Dans l'exemple illustré, la face du sac **3** dans laquelle est aménagé le passage d'accès **8** est la face recto **4.**

Il est à noter que pour certaines applications, notamment pour le transport de prélèvements sanguins ou autres, l'emballage **1** doit présenter un caractère étanche. Les bords du sac sont soudés pour délimiter un volume interne étanche dont le passage d'accès **8** est fermé à l'aide d'un moyen de fermeture **9** étanche. Il est à noter que la solidité et par suite l'étanchéité de l'emballage **1** peuvent être renforcées en rapportant sur tout ou partie des faces **4, 5,** au moins une feuille plastique souple. L'emballage **1** peut aussi être formé par une double paroi.

Bien entendu, le passage d'accès **8** est adapté pour permettre l'introduction de l'article **2** à l'intérieur du volume interne du sac **3.** Il est à noter que dans l'exemple illustré à la **Fig. 1** le passage d'accès **8** est réalisé à proximité d'un bord transversal du sac **3** en étant orienté parallèlement audit bord transversal **6₁.** Bien entendu, il est clair qu'un tel passage d'accès **8** peut être réalisé à n'importe quel endroit de l'emballage en étant orienté différemment comme par exemple parallèlement aux bords longitudinaux **7.** De même, le passage d'accès **8** peut être aménagé dans la partie médiane du sac **3.**

Le passage d'accès **8** est obturé par tout moyen de fermeture **9.** Par exemple, le passage d'accès **8** est obturé à l'aide d'une bande adhésive de sécurité **9** constituant de préférence un témoin d'inviolabilité. Comme illustré plus particulièrement à la **Fig. 1****,** cette bande adhésive **9** est fixée en partie sur l'emballage **1** et se trouve munie d'une protection détachable **10.** Après l'enlèvement de la protection **10,** la bande adhésive **9** est fixée sur l'emballage en venant recouvrir le passage d'accès **8.** Le moyen de fermeture **9** peut être réalisé aussi par de la colle déposée sur un prolongement **5₁** de la feuille constitutive de l'emballage et formant un rabat comme illustré à la **Fig. 2****.** Selon cet exemple de réalisation, il est à noter qu'une soudure transversale reliant les deux bords longitudinaux soudés **7** doit être réalisée entre le passage d'accès **8** et le bord transversal antérieur **6₁** pour obtenir une enveloppe étanche. La colle est protégée par une protection **10** qui est enlevée avant le collage sur l'emballage, du rabat **5₁** qui recouvre le passage d'accès **8.**

Selon une caractéristique de l'invention, l'emballage **1** est pourvu d'au moins un système de propulsion **11** à l'intérieur du réseau pneumatique. Selon une caractéristique préférée de réalisation, et tel que cela ressort plus précisément de la **Fig. 2****,** le système de propulsion **11** est réalisé par l'intermédiaire d'un soufflet aménagé au niveau du bord transversal postérieur **6₂** opposé au bord transversal **6₁** à proximité duquel est aménagé le passage d'accès **8.** Il doit être considéré que le soufflet **11** est aménagé de manière que l'emballage occupe, par son fond, une majeure partie de la section du réseau pneumatique de manière à pouvoir être déplacé d'une façon optimum selon un sens déterminé de la direction de transport **D,** représenté par la flèche **F₁.** De manière classique, l'emballage **1** présente par son bord transversal délimitant le soufflet **11,** à savoir **6₂** dans l'exemple illustré, une largeur à plat de préférence supérieure au diamètre du réseau de transport de manière qu'après formation du soufflet de fond, le diamètre de l'emballage correspondant au diamètre du soufflet, soit légèrement inférieur voire égal au diamètre du tube du réseau de transport.

Selon une autre caractéristique de l'objet de l'invention, le bord transversal antérieur **6₁** possède une largeur inférieure au reste de l'emballage, de sorte que l'emballage **1** présente, à partir de ce bord transversal, un nez **13** facilitant l'introduction de l'emballage à l'intérieur du réseau pneumatique. Tel que cela ressort de la **Fig. 3****,** l'emballage **1** possède ainsi à partir de son bord antérieur **6₁** une largeur qui augmente jusqu'à une valeur égale à la largeur des deux bords longitudinaux **7** s'étendant parallèlement entre eux. L'emballage **1** présente ainsi un nez d'introduction **13** de forme tronconique dont la petite base est formée par le bord transversal antérieur **6₁.** La hauteur du nez d'introduction **13** est optimisée selon la longueur de l'emballage de manière à ne pas restreindre le volume interne du sac **3.**

Dans l'exemple illustré à la **Fig. 3****,** le nez d'introduction **13** est formé par le pliage de deux parties **14** rabattues, appelées coins, de l'emballage et maintenues en position par l'intermédiaire de moyens de fixation **15.** Dans l'exemple illustré, chaque partie rabattue **14** de l'emballage s'étend à partir d'un coin de l'emballage et est délimité par une partie du bord transversal antérieur **6₁** et du bord longitudinal voisin **7.** Dans l'exemple illustré, chaque coin rabattu **14** est plié selon une ligne de pliage qui s'étend du bord transversal antérieur **6₁** au bord longitudinal voisin **7** selon une angulation de l'ordre de **45°.** Chaque coin rabattu **14** possède ainsi une surface triangulaire. Bien entendu, il pourrait être envisagé de modifier l'angle de la ligne de pliage des coins rabattus **14.**

Les coins rabattus **14** sont repliés dans l'exemple illustré sur la face recto **4** et sont maintenus en position rabattue par tout type de moyens de fixation **15.** Selon une caractéristique préférée de réalisation, les moyens de fixation **15** sont interposés entre l'emballage et le ou les coins rabattus **14.** Ces moyens de fixation **15** sont disposés de manière continue ou discontinue sur les coins rabattus **14** et/ou sur l'une ou les deux faces d'emballage sur une surface qui est inférieure, égale, voire supérieure à la surface du coin rabattu **14** en regard. Les coins rabattus se trouvent fixés par au moins une partie de leur surface. Par exemple, les moyens de fixation **15** sont réalisés par de la colle ou d'un adhésif. Il peut être envisagé que les moyens de fixation **15** soient formés par au moins un moyen adhésif rapporté venant en chevauchement sur le coin rabattu et l'emballage. Ce moyen adhésif peut être fixé au préalable sur l'emballage.

Selon une caractéristique préférée de réalisation, les moyens de fixation **15** sont recouverts d'une protection détachable qui est retirée juste avant le pliage des coins rabattus. Cette protection peut être réalisée par un film recouvrant au moins la surface de colle ou de l'adhésif.

Selon une caractéristique de réalisation, ces moyens de fixation **15** peuvent être réalisés par le moyen de fermeture **9** du passage d'accès. Selon un exemple de réalisation illustrée à la **Fig. 3****,** la bande adhésive **9** est du type double face à double protection détachable, de sorte que l'enlèvement de la protection externe permet d'assurer le collage des coins rabattus venant en position de superposition. Selon un autre exemple de réalisation, des trous débouchants sont réalisés dans les faces **4, 5,** à proximité du passage d'accès **8,** de sorte que la mise en place de la bande adhésive **9** sur la face recto **4** pour fermer le passage d'accès **8,** conduit à l'apparition de l'adhésif sur la face verso **5,** à travers ces trous débouchants. Les coins rabattus **14** sont pliés pour être rabattus sur la face verso **5** en vue d'être fixés à cette face verso **5** grâce à l'adhésif présent dans ces trous.

Dans l'exemple de réalisation illustré à la **Fig. 3****,** le nez d'introduction **13** est réalisé par le pliage de deux coins **14** repliés sur la même face, à savoir la face recto **4.** Bien entendu, il peut être envisagé de rabattre les deux coins **14** sur la face verso **5.** De même, il peut être envisagé de rabattre un coin sur une face et l'autre coin sur l'autre face. De même, il peut être envisagé de plier un seul coin sur l'emballage.

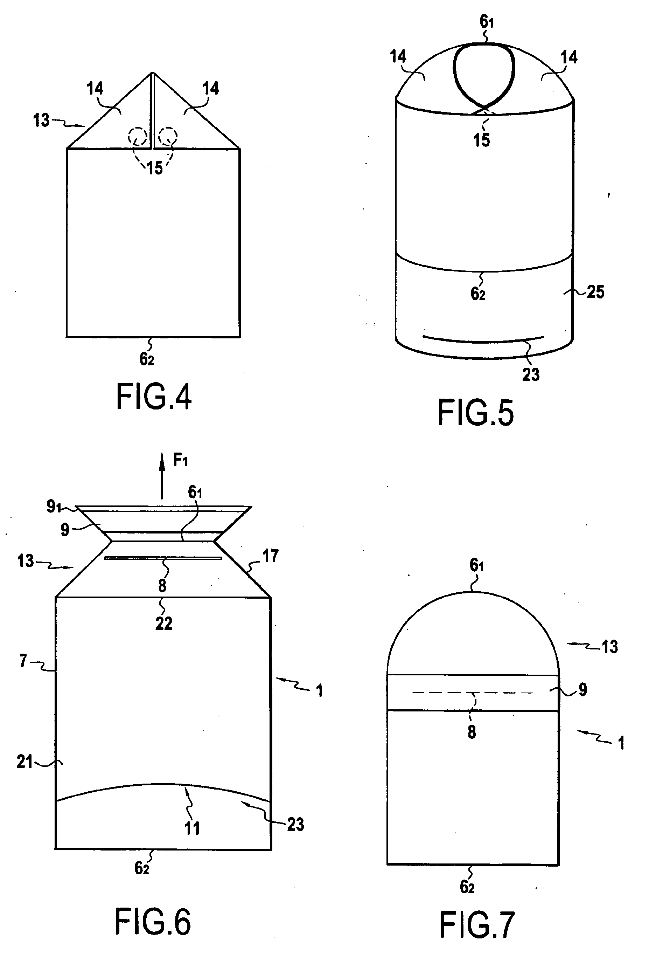

Dans l'exemple illustré à la **Fig. 3****,** les deux coins rabattus **14** ne sont pas jointifs. Dans l'exemple illustré à la **Fig. 4****,** il peut être envisagé que le nez d'introduction **13** se trouve formé par le pliage de deux coins rabattus **14** qui sont placés côte à côte par l'un de leur côté. Selon cet exemple de réalisation, le nez d'introduction **13** présente un profil de forme triangulaire.

Dans les exemples illustrés aux **Fig. 3** et **4****,** les coins rabattus **14** sont fixés sur l'emballage **1.** La **Fig. 5** illustre une autre variante de réalisation dans laquelle les deux coins rabattus **14** de l'emballage sont pliés pour être au moins partiellement en position superposée. Dans l'exemple illustré, les coins rabattus **14** sont placés de manière que la partie située au niveau de leur coin soit placée l'une sur l'autre de manière à être maintenue dans cette position par les moyens de fixation **15.** Selon cette variante de réalisation, les moyens de fixation **15** sont disposés entre les deux coins rabattus **14** qui ne se trouvent pas fixés sur l'emballage. Dans le même sens, les deux coins rabattus **14** de l'emballage illustré à la **Fig. 4** peuvent être maintenus ensemble par l'intermédiaire d'une bande adhésive rapportée, après le pliage des coins rabattus, sur ces deux coins rabattus. Selon ces variantes de réalisation, les moyens de fixation **15** assurent une liaison entre les deux coins rabattus **14** et non entre les coins rabattus et l'une ou l'autre des faces de l'emballage.

L'emballage **1** selon l'invention présente ainsi au niveau de son bord transversal antérieur **6₁** une largeur inférieure par rapport au reste de l'emballage. L'emballage **1** présente ainsi un nez d'introduction **13** effilé facilitant l'insertion de l'emballage à l'intérieur du réseau de transport tout en autorisant le positionnement correct du soufflet **11** à l'intérieur du réseau de transport pour assurer le déplacement de l'emballage. Il est à noter que l'objet de l'invention permet également de laisser un volume important pour le logement du produit **2** à transporter. A cet égard, le pliage des coins rabattus **14** est réalisé sur une longueur optimisée de l'emballage tenant compte de la taille de l'article **2.**

Dans les exemples qui précèdent, la diminution de la largeur du bord transversal antérieur **6₁** est réalisée par le pliage d'au moins l'un des coins qui est rabattu. La **Fig. 6** illustre une autre variante de réalisation dans laquelle le nez d'introduction **13** est réalisé directement par la forme de l'emballage. Tel que cela ressort de la **Fig. 6****,** l'emballage **1** présente entre le bord transversal antérieur **6₁** et chaque bord longitudinal **7** une découpe **17** en biais par exemple de l'ordre de **45°,** de sorte que le bord transversal antérieur **6₁** présente une largeur inférieure à la largeur du reste de l'emballage **1.** Bien entendu, une soudure est réalisée au niveau des bords en biais **17** qui assure une liaison entre les bords longitudinaux **7** et le bord transversal antérieur **6₁** de manière à constituer un volume interne fermé accessible par le passage d'accès **8.** Le passage d'accès **8** est obturé par tout moyen de fermeture **9.** Dans l'exemple illustré, le moyen de fermeture **9** est réalisé par de la colle ou une bande adhésive portée par un rabat mobile **9₁** s'étendant à partir du bord transversal antérieur **6₁.** Le moyen de fermeture **9** est équipé d'une protection qui est enlevée avant de replier le rabat **9₁** contre l'emballage. Il est à noter que le rabat **9₁** présente une forme symétrique au nez d'introduction **13.** Bien entendu, il peut être prévu que le rabat **9₁** présente diverses formes adaptées pour permettre au moyen de fermeture **9** de recouvrir le passage d'accès **8.**

Dans l'exemple illustré à la **Fig. 6****,** l'emballage **1** qui comporte un rabat **9₁** muni d'un moyen de fermeture **9** présente une forme telle qu'il présente, après fermeture de l'emballage par le pliage du rabat **9₁,** un profil tronconique à partir de son bord transversal antérieur **6₁.** Bien entendu, l'emballage **1** peut présenter d'autres formes pour posséder un nez d'introduction dont la largeur augmente à partir de son bord transversal antérieur **6₁.** Par exemple, l'emballage **1** peut présenter au niveau de son bord transversal antérieur **6₁** un profil arrondi, comme illustré à la **Fig. 7****.** Dans cet exemple, l'emballage **1** possède un moyen de fermeture **9** réalisé par un adhésif.

Dans l'exemple illustré à la **Fig. 6****,** le moyen de propulsion **11** est réalisé par une poche formée à partir d'un film **21** soudé au niveau des bords longitudinaux **7** et par une soudure transversale **22** aménagée à proximité par exemple de l'ouverture d'accès **8.** La poche **11** présente ainsi au niveau du bord transversal amont **6₂,** une ouverture **23** permettant l'entrée de l'air comprimé et le déplacement de l'emballage selon le sens **F₁** de la direction de transport. Bien entendu, la poche de propulsion peut être réalisée de différentes manières. Par exemple, la poche peut être obtenue en ménageant une fente dans un film rapporté sur l'une et/ou l'autre des faces de l'emballage. De même, comme illustré à la **Fig. 5****,** une ouverture **23** telle qu'une fente peut être aménagée dans un prolongement **25** du film constitutif de l'emballage. Bien entendu, la poche de propulsion peut présenter diverses hauteurs adaptées pour permettre un transport convenable dans le réseau d'air comprimé.

Bien entendu, il pourrait être envisagé d'équiper l'emballage **1** illustré à la **Fig. 6** par un soufflet de fond. De même, il est à noter que l'emballage illustré à la **Fig. 3** pourrait être équipé d'au moins une poche de propulsion telle qu'illustrée à la **Fig. 6****.** Dans le même sens, il peut être envisagé d'équiper chacune des faces de l'emballage par une poche de propulsion. Selon une autre variante de réalisation, il est à noter qu'il peut être envisagé de réaliser l'emballage de manière à permettre sa propulsion dans les deux sens **F₁, F₂** de la direction de transport **D.** Selon cette dernière variante de réalisation, l'emballage est équipé d'un système de propulsion **11** assurant la propulsion de l'emballage selon les deux sens de la direction de transport. Dans cet exemple, il peut être prévu d'équiper l'emballage **1** à partir de chaque bord transversal d'un soufflet et/ou d'une ou de plusieurs poches de propulsion. Selon cette variante, chaque bord transversal possède une largeur inférieure au reste de l'emballage, de sorte que l'emballage présente à partir de chaque bord transversal **6₁, 6₂** un nez d'introduction **13** à l'intérieur du réseau d'air comprimé. Ce nez d'introduction **13** est réalisé par l'une et/ou l'autre des solutions décrites précédemment.

L'invention n'est pas limitée aux exemples décrits et représentés car diverses modifications peuvent y être apportées sans sortir de son cadre.

## Revendications

1. Emballage pour le transport d'articles (**2**) à l'intérieur d'un tube d'un réseau pneumatique, comportant un sac (**3**) réalisé en matière plastique souple soudée possédant une face recto (**4**) et une face verso (**5**) délimitant un volume interne fermé accessible par un passage d'accès (**8**) aménagé dans une face du sac et obturable après remplissage par un moyen de fermeture étanche (9) comportant une protection détachable (**10**), le moyen de fermeture étanche (**9**) venant recouvrir le passage d'accès (**8**) après l'enlèvement de la protection détachable (**10**) , l'emballage étant pourvu d'un système de propulsion (**11**) à l'intérieur du réseau pneumatique, selon au moins un sens d'une direction (**D**) de transport de l'emballage qui est sensiblement perpendiculaire à deux bords transversaux opposés (**6₁**, **6₂**) de l'emballage, ce système de propulsion (**11**) comportant au moins une poche de propulsion ou au moins un soufflet de fond qui présente après sa formation, un diamètre légèrement inférieur voire égal au diamètre du tube du réseau pneumatique,
**caractérisé en ce qu'**au moins le bord transversal dit antérieur (**6₁**) par rapport au sens de transport possède une largeur inférieure au reste de l'emballage de sorte que l'emballage (**1**) présente à partir de ce bord transversal, un nez d'introduction (**13**) à l'intérieur du réseau pneumatique.

2. Emballage selon la revendication 1, **caractérisé en ce que** le système de propulsion (**11**) assure la propulsion de l'emballage (**1**) selon les deux sens (**F₁, F**₂) de la direction de transport et **en ce que** chaque bord transversal (**6₁, 6₂**) possède une largeur inférieure au reste de l'emballage de sorte que l'emballage (**1**) présente à partir de chaque bord transversal (**61, 6₂**), un nez d'introduction (**13**) à l'intérieur du réseau pneumatique.

3. Emballage selon la revendication 1 ou 2, **caractérisé en ce que** chaque nez d'introduction (**13**) est réalisé par la forme de l'emballage.

4. Emballage selon la revendication 1 ou 2, **caractérisé en ce que** chaque nez d'introduction (**13**) est formé par le pliage d'au moins un coin rabattu (**14**) de l'emballage et maintenu en position pliée par des moyens de fixation (**15**).

5. Emballage selon la revendication 4 **caractérisée en ce que** les moyens de fixation (**15**) sont interposés entre l'emballage et le ou les coins rabattus (**14**).

6. Emballage selon la revendication 4 ou 5, **caractérisé en ce que** chaque coin rabattu (**14**) est replié sur l'une et/ou l'autre face de l'emballage en étant maintenus en position rabattue par des moyens de fixation (**15**).

7. Emballage selon la revendication 4, **caractérisé en ce que** les deux coins rabattus (**14**) sont pliés pour être au moins partiellement en position superposée maintenue par les moyens de fixation (**15**).

8. Emballage selon l'une des revendications 4 à 7, **caractérisé en ce que** les moyens de fixation (**15**) sont réalisés par de la colle ou un adhésif pourvu d'au moins la protection détachable (**10**).

9. Emballage selon les revendications 1 et 8, **caractérisé en ce que** les moyens de fixation (**15**) sont réalisés par le moyen de fermeture (**9**) du passage d'accès.

10. Emballage selon la revendication 9, **caractérisé en ce que** le moyen de fermeture (**9**) est apte, en position de fermeture du passage d'accès (**8**), à occuper en partie des trous débouchants aménagés dans les faces de l'emballage, sur lesquels sont rabattus pour fixation, chaque coin rabattu (**14**).

## Claims

1. Packaging for conveying items (2) inside a tube of a pneumatic network, comprising a bag (3) made in welded flexible plastic material having a recto side (4) and a verso side (5) delimiting a closed inner volume accessible via an access passage (8) arranged in one side of the bag and which can be closed after filling by sealed closing means (9), comprising a detachable protection (10), the sealed closing means (9) covering the access passage (8) after the detachable protection (10) has been removed, the packaging being provided with a propelling system (11) inside the pneumatic network in at least one direction (D) of a direction of transfer of the packaging which is substantially perpendicular to two opposite transverse edges (6₁, 6₂) of the packaging, this propelling system (11) comprising at least one propelling pocket or at least one bottom gusset which, after its formation, has a diameter slightly smaller and even equal to the diameter of the tube of the pneumatic network,
**characterized in that** at least the so-called anterior transverse edge (6₁) relative to the direction of transfer has a width smaller than the remainder of the packaging so that the packaging (1), starting from this transverse edge, has a nose (13) for engaging inside the pneumatic network.

2. The packaging according to claim 1 **characterized in that** the propelling system (11) ensures the propelling of the packaging (1) in the two directions (F₁, F₂) of transfer direction and **in that** each transverse edge (6₁, 6₂) has a width that is smaller than the remainder of the packaging so that the packaging (1), starting from each transverse edge (6₁, 6₂), has a nose (13) to engage inside the pneumatic network.

3. The packaging according to claim 1 or 2, **characterized in that** each engaging nose (13) is formed by the shape of the packaging.

4. The packaging according to claim 1 or 2, **characterized in that** each engaging nose (13) is formed by the folding of at least one folded-down corner (14) of the packaging and held in folded position by fixing means (15).

5. The packaging according to claim 4, **characterized in that** the fixing means (15) are inter-positioned between the packaging and the folded-down corner(s) (14).

6. The packaging according to claim 4 or 5, **characterized in that** each folded-down corner (14) is folded over one and/or the other side of the packaging, being held in folded-down position by fixing means (15).

7. The packaging according to claim 4, **characterized in that** the two folded-down corners (14) are folded so that they are at least partly in superimposed position and held by the fixing means (15).

8. The packaging according to one of claims 4 to 7, **characterized in that** the fixing means (15) are made of glue or an adhesive at least provided with the detachable protection (10).

9. The packaging according to claims 1 and 8, **characterized in that** the fixing means (15) are formed by the closing means (9) of the access passage.

10. The packaging according to claim 9, **characterized in that** the closing means (9) are capable, when the access passage (8) is in closed position, of partly occupying through holes arranged in the sides of the packaging, over which each folded-down corner (14) is folded for fixing thereof.

## Patentansprüche

1. Verpackung für den Transport von Artikeln (2) in einem Rohr eines Druckluftnetzes, umfassend einen aus verschweißtem flexiblem Kunststoff bestehenden Beutel (3), der eine Vorderseite (4) und eine Rückseite (5) besitzt, die einen geschlossenen Innenraum begrenzen, der über einen Zugangsdurchgang (8) zugänglich ist, welcher in einer Seite des Beutels ausgebildet und nach Befüllen durch ein Mittel zum dichten Verschließen (9), das einen ablösbaren Schutz (10) umfaßt, verschließbar ist, wobei das Mittel zum dichten Verschließen (9) nach Entfernen des ablösbaren Schutzes (10) den Zugangsdurchgang (8) bedeckt, wobei die Verpackung mit einem System zum Antreiben (11) innerhalb des Druckluftnetzes in wenigstens einem Sinn einer Transportrichtung (D) der Verpackung, die zu zwei gegenüberliegenden Querrändern (6₁, 6₂) der Verpackung im wesentlichen senkrecht verläuft, versehen ist, wobei dieses Antriebssystem (11) wenigstens eine Antriebstasche oder wenigstens einen Bodenbalg umfaßt, der nach seiner Bildung einen Durchmesser aufweist, der geringfügig kleiner als der, ja sogar gleich dem Durchmesser des Rohrs des Druckluftnetzes ist,
**dadurch gekennzeichnet, daß** wenigstens der sogenannte vordere Querrand (6₁), bezogen auf die Transportrichtung, eine geringere Breite als der Rest der Verpackung aufweist, so daß die Verpackung (1) ausgehend von diesem Querrand eine Nase zum Einführen (13) in das Druckluftnetz aufweist.

2. Verpackung nach Anspruch 1, **dadurch gekennzeichnet, daß** das Antriebssystem (11) den Antrieb der Verpackung (1) in beiden Sinnen (F₁, F₂) der Transportrichtung sicherstellt und daß jeder Querrand (6₁, 6₂) eine geringere Breite als der Rest der Verpackung aufweist, so daß die Verpackung (1) ausgehend von jedem Querrand (6₁, 6₂) eine Nase zum Einführen (13) in das Druckluftnetz aufweist.

3. Verpackung nach Anspruch 1 oder 2, **dadurch gekennzeichnet, daß** jede Einführnase (13) durch die Form der Verpackung gebildet ist.

4. Verpackung nach Anspruch 1 oder 2, **dadurch gekennzeichnet, daß** jede Einführnase (13) durch das Falten wenigstens einer umgeschlagenen Ecke (14) der Verpackung, die durch Fixiermittel (15) in der gefalteten Position gehalten wird, gebildet ist.

5. Verpackung nach Anspruch 4, **dadurch gekennzeichnet, daß** die Fixiermittel (15) zwischen der Verpackung und der oder den umgeschlagenen Ecke(n) (14) eingefügt sind.

6. Verpackung nach Anspruch 4 oder 5, **dadurch gekennzeichnet, daß** jede umgeschlagene Ecke (14) auf die eine und/oder die andere Seite der Verpackung gefaltet und dabei durch Fixiermittel (15) in der umgeschlagenen Position gehalten ist.

7. Verpackung nach Anspruch 4, **dadurch gekennzeichnet, daß** die beiden umgeschlagenen Ecken (14) gefaltet sind, um sich wenigstens teilweise in durch die Fixiermittel (15) gehaltener übereinander liegender Position zu befinden.

8. Verpackung nach einem der Ansprüche 4 bis 7, **dadurch gekennzeichnet, daß** die Fixiermittel (15) durch Kleber oder ein Haftmittel, das wenigstens mit dem ablösbaren Schutz (10) versehen ist, gebildet sind.

9. Verpackung nach den Ansprüchen 1 und 8, **dadurch gekennzeichnet, daß** die Fixiermittel (15) durch das Mittel zum Verschließen (9) des Zugangsdurchgangs gebildet sind.

10. Verpackung nach Anspruch 9, **dadurch gekennzeichnet, daß** das Verschlußmittel (9) in der Position zum Verschließen des Zugangsdurchgangs (8) geeignet ist, in den Seiten der Verpackung ausgebildete Durchgangslöcher, auf die jede umgeschlagene Ecke (14) zum Fixieren heruntergeklappt wird, teilweise einzunehmen.
